# EUROPÄISCHE PATENTSCHRIFT

(11) **EP 0 475 339 B1**
(45) Veröffentlichungstag und Bekanntmachung des Hinweises auf die Patenterteilung: **14.12.1994**
(21) Anmeldenummer: 91115251.0
(22) Anmeldetag: 10.09.1991
(51) Int. Cl.: B62D 47/02, B60D 5/00

(54) **Faltenbalg-Verschiebe- und Drehscheibenwinkelhalbierungseinrichtung für einen Niederflur-Drehgelenk-Omnibus**
Device for moving the bellows and bisecting the turntable angle for a low floor articulated omnibus
Dispositif pour bouger le soufflet et pour la mi-partition de l'angle du disque rotatif pour autobus surbaissé et articulé

(30) Priorität: 10.09.1990 DE 4028733
(43) Veröffentlichungstag der Anmeldung: 18.03.1992
(73) Patentinhaber: HYMER LEICHTMETALLBAU GmbH & Co. KG, D-88228 Wangen (DE)
(72) Erfinder: Krause, Fritz, W-7988 Wangen/Allgäu (DE); Boetzelen, Rudolph, W-7988 Wangen/Allgäu (DE)
(74) Vertreter: Riebling, Peter, Dr.-Ing.

(56) Entgegenhaltungen:
- EP-A- 0 045 889
- EP-A- 0 076 040
- DE-A- 3 904 756
- DE-C- 965 470
- PATENT ABSTRACTS OF JAPAN, Band 9, Nr. 330 (M-442)(2053), 25. Dezember 1985 & JP-A-60 161 277

## Beschreibung

Bei einem Faltenbalg für Niederflur-Drehgelenk-Omnibusse ist es wichtig, daß dieser Faltenbalg unabhängig von dem Knickwinkel zwischen Vorderwagen und Hinterwagen in der Mitte des Rahmens gehalten wird. Dieser Faltenbalg soll also in der Winkelhalbierenden des Knickwinkels zwischen Vorder- und Hinterwagen gehalten werden.

Aus der EP-0 045 889 (D1) ist eine zentrische Fixierung dieses Faltenbalgs bekannt. Hier ist bereits eine Hebelanordnung neben dem Drehgelenk vorgesehen. Diese Hebelanordnung hat den Zweck, das Drehgelenk zwischen Vorderund Hinterwagen von Vertikalkräften zu entlasten.

Eine Führung des Faltenbalgs durch diese Hebelanordnung ist nicht vorgesehen und auch nicht Aufgabe dieser Erfindung.

In der EP-O 076 040 wird eine Einrichtung geschildert, die das Knicken des Busses um die Drehgelenkachse erleichtert. Bei der hier vorgesehenen Anordnung wird der Faltenbalg (17) an zwei Stellen (128, 130) an einer Schubstange (36) befestigt und entsprechend verschoben. Die Auslenkung erfolgt aber nicht aus der Knickbewegung des Busses heraus, sondern wird durch verschiedene pneumatische Vorrichtungen (38-44) hervorgerufen. Dabei wird der Faltenbalg nicht in Bezug auf die Knickachse verschoben. Die Schubstange 36 bleibt bei Kurvenfahrt des Fahrzeuges gegenüber den Knickachsen 80, 100 zentriert (siehe Figur 4). Das ganze System ist äußerst kompliziert, aufwendig und teuer (vergleiche Abbildungen 3, 4, 8, 9, 11).

Der vorliegenden Erfindung liegt deshalb die Aufgabe zugrunde, eine Verschiebeeinrichtung des Faltenbalgs vorzusehen, die eine definierte Verschiebebewegung des Faltenbalgs im Bereich zwischen den beiden Bauteilen-Wagen gewährleistet, wobei auf hochkomplizierte und teure Bauteile sowie Vorrichtungen verzichtet werden kann.

Zur Lösung der Aufgabe ist die Erfindung durch die technische Lehre des Anspruchs 1 oder des Anspruchs 2 gekennzeichnet.

Mit der gegebenen technischen Lehre wird also der wesentliche Vorteil erreicht, daß man außerhalb des Drehgelenkes in horizontaler Ebene eine Verschiebeanordnung schafft, die im wesentlichen aus Drehlagern gebildet ist, welche Drehlager stets unabhängig vom dem Knickwinkel zwischen dem Vorderwagen und dem Hinterwagen auf einer Winkelhalbierenden bezüglich des Nickwinkels sich bewegen.

Wichtig hierbei ist, daß der Abstand zwischen den einander gegenüberliegenden Drehlagern der Gelenkdreiecke stets konstant ist, so daß der Faltenbalg immer die gleiche Breite aufweist und hierdurch keinen Verschleißerscheinigungen ausgesetzt ist, z. B. nicht einknickt.

Ferner ist wesentlich, daß sich diese Drehpunkte entsprechend der Abknickung zwischen dem Vorder- und Hinterwagen so bewegen, daß der Faltenbalg somit immer in der Winkelhalbierenden des Knickwinkels zwischen Vorder- und Hinterwagen gehalten wird.

Ein weiterer wesentlicher Vorteil der Erfindung ist, daß die horizontal seitlich über den Drehkranz hinausstehenden Gelenkdreiecke gleichzeitig zur Halterung der Versorgungsleitungen zwischen dem Vorder- und Hinterwagen dienen. Damit ergibt sich eine stabile knickfreie Halterung, welche gleichzeitig die Versorgungsleitungen gegen Beschädigungen schützt.

Im übrigen ist wesentlich, daß jeweils ein Hebelarm des jeweiligen Gelenkdreieckes hinter der Nickachse an dem Rahmen des Drehkranzes ansetzt, wobei wesentlich ist, daß der dort ansetzende Drehpunkt als Kugelkopf ausgebildet ist, um die zwischen dem Rahmen des Hinterwagens und dem Vorderwagen bestehenden Nickbewegungen aufzufangen. Damit wird vermieden, daß derartige Nickbewegungen auf die außen liegenden, in horizontaler Ebene sich bewegenden Drehpunkte des Gelenkdreieckes übertragen werden.

Die außen liegenden Drehgelenke können hierbei als dreidimensional bewegbare Kugelköpfe ausgebildet sein.

Aufgrund der symmetrischen Anordnung der Gelenkhebel (die Symmetrielinie ist gleichzeitig die Querlinie zum Fahrzeug und schneidet die Knickachse) ist eine exakte Winkelhalbierende in allen Bereichen des Knickwinkels gewährleistet.

Ein seitliches Verschieben des Faltenbalgrahmens (Mittelrahmen) ist genau durch die Wahl des geometrischen Mittelpunktes der gewünschten Bahnkurve definierbar und diese Verschiebung wird durch die Drehscheibenanordnung exakt aktiviert.

Bei bisher bekannten Drehscheibensteuerungen, zur Erzielung der Winkelhalbierenden wurde bisher keine Verschiebung des Faltenbalges ausgeführt, bestand der Nachteil einer asymmetrischen Anordnung und es traten dadurch Halbierungsfehler bei Rechts- und Linksknicken auf.

Nach der vorliegenden Erfindung ist wegen des symmetrischen Aufbaus eine exakte Halbierung des Knickwinkels gegeben und genau in dieser Winkelhalbierenden wird der Mittelrahmen des Faltenbalges geführt und durch die Wahl der Mittelpunkte nach innen verschoben, so daß der theoretische Mittelpunkt auf einer Kreisbahn der Fahrzeuglängsachse sich bewegt und nicht wie bisher auf den Verlängerungen der beiden Fahrzeugachsen beharren bleibt.

Die Hebelanordnung ist konstruktiv so ausgeführt, daß sie ideal für eine Niederflur-Bauweise geeignet ist. Jeweils rechts und links von den Hauptkomponenten des Drehgelenkes ausgehend ragen hierbei die erfindungsgemäßen Hebelpaare nach außen, ohne daß es hierbei zu einem zusätzlichen Aufbau auf dem Drehgelenk kommt, was in nachteiliger Weise die Bauhöhe erhöhen würde. Nachdem die Hebelpaare seitlich neben dem Drehkranz angeordnet sind, wird hierdurch die Bauhöhe durch die erfindungsgemäße Verschiebungsanordnung nicht vergrößert.

Ein zusätzlicher Vorteil ist, daß die Hebelanordnung so gestaltet sein kann, daß sie zusätzlich als Drehscheibenauflage dient.

In einer ersten Ausführungsform der Erfindung ist vorgesehen, daß lediglich an einer Fahrzeugseite ein Gelenkhebelpaar angeordnet ist, was allerdings beim Knicken und Strecken unter Zug- und Druckbelastungen kommt.

Um eine günstigere Kraftübertragung zu gewährleisten, ist erfindungsgemäß vorgesehen, daß an beiden Seiten des Fahrzeuges jeweils ein Hebelpaar angeordnet ist, so daß Knick- und Druckkräfte nicht auf die Hebel übertragen werden können.

Hierbei ist konstruktiv vorgesehen, daß bei einem üblichen Knickwinkel von 52° nach rechts und links der Faltenbalgrahmen seitlich um ca. plus/minus 185 mm verschoben wird. Somit gleicht sich die Faltenlänge einer idealen Kreisbahn um den gemeinsamen Mittelpunkt an. Der gemeinsame Mittelpunkt ist die Querlinie der Karosserie von Vorder- und Hinterwagen. Durch diese Verschiebung erhöht sich die Lebensdauer des Faltenbalges und eine untere Abdichtung, z. B. über Kunststoffabdeckplatten, ist möglich, da kein Verwinden einzelner Falten im Drehbereich und hier vor allem im Bereich der unteren Abdeckung vorkommt. Es kann also eine ebene bodenseitige Abdeckung z. B. über die erwähnten Kunststoffabdeckplatten erfolgen.

Erfindungsgemäß ist zusätzlich vorgesehen, daß die Gelenkhebel zur Halterung und Führung von Kabel- und Schlauchleitungen dienen, die vom Vorderwagen zum Hinterwagen oder umgekehrt geführt werden. Erfindungsgemäß ist ferner vorgesehen, daß die hinter der Nickachse angreifenden Fußpunkte der Hebelpaare als Kugelköpfe ausgebildet sind, um eine Nickbewegung zwischen dem Vorder- und dem Hinterwagen aufnehmen zu können.

Konstruktiv wird der Anlenkpunkt am Vorderwagen so ermittelt, daß die idealen Fußpunkte bei der Winkelhalbierenden von 26° dazu genommen werden den gemeinsamen Mittelpunkt durch zeichnerische oder rechnerische Bestimmung zu erhalten. Diese genaue Ermittlung ist notwendig, um bei beidseitiger Anlenkung keine unerwünschte Längenänderung zu erhalten.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Seitenansicht eines Niederflur-Drehgelenk-Omnibusses nach der Erfindung mit Darstellung der wesentlichsten Baugruppen;
- Figur 2:: schematisiert eine Draufsicht auf das Drehgelenk der Anordnung nach Figur 1.

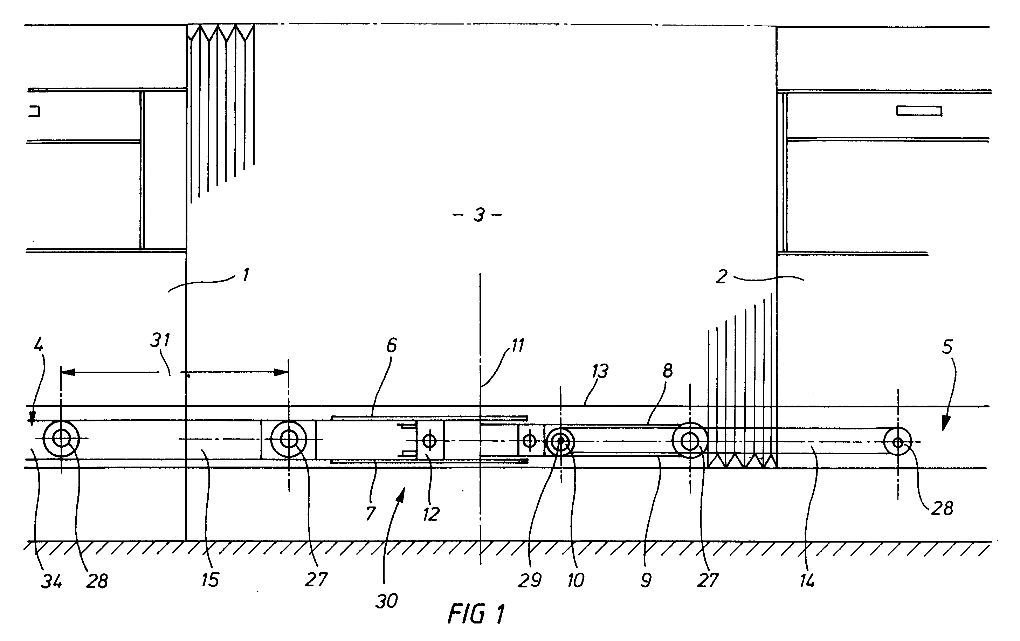

Gemäß Figur 1 besteht der Vorderwagen 1 aus einem bodenseitigen Rahmen mit einer Befestigungsplatte 34. der Rahmen des Hinterwagens ist mit 5 bezeichnet.

Der jeweilige Rahmen 4,5 weist also im wesentlichen eine Befestigungsplatte 34 auf. Die gleichen Verhältnisse gelten für den Hinterwagen 2. Vorder- und Hinterwagen 1,2 sind über einen Faltenbalg 3 miteinander verbunden.

Die eigentliche Drehverbindung erfolgt über das Drehgelenk 30, welches über Schwingblöcke 27,28 die elastische Verbindung zu dem Rahmen 4,5 des Vorder- und Hinterwagens 1,2 herstellt.

Weil diese Verbindung elastisch ausgebildet ist und durch jeweils drei Schwingblöcke 27,28 gebildet wird, werden auch damit eventuell übertragene Zug-, Druck- und Torsionskräfte auf die Struktur des Vorder- bzw. Hinterwagens durch die Schwingblöcke 27,28 gedämpft aufgenommen.

Hierbei ist erkennbar, daß der Rahmen 4 des Vorderwagens über seitliche Platten an dem in horizontaler Ebene liegenden Schwingblockpaar 27 ansetzt.

Der Rahmen 14 des Drehgelenkes 30 wird hierbei durch drei parallele einen gegenseitigen Abstand voneinander einnehmende Rohre gebildet, die über die Platte 6 miteinander verbunden sind. Ebenso ist die untere Platten 7 zur Verbindung der Unterseiten dieser Rahmenteile 14 vorgesehen.

In analoger Weise wird der hintere Rahmen 15 des Drehgelenkes durch wiederum drei Rohre gebildet, die durch obere und untere Platten 8,9 miteinander verbunden sind.

Es liegt eine Dreipunkt-Aufhängung mit den Schwingblöcken 27,28 vor, wobei z. B. der Rahmen 4 des Vorderwagens mit der erwähnten Befestigungsplatte 34 an der einen Seite des Schwingblockes 27 jeweils angreift, während ein mittlerer Schwingblock 28 nach hinten versetzt von dem einander gegenüberliegenden Schwingblockpaar 27 jeweils angeordnet ist.

Die Verbindung des Rahmens 4,5 an den hinteren Schwingblock 28 ist nicht näher dargestellt.

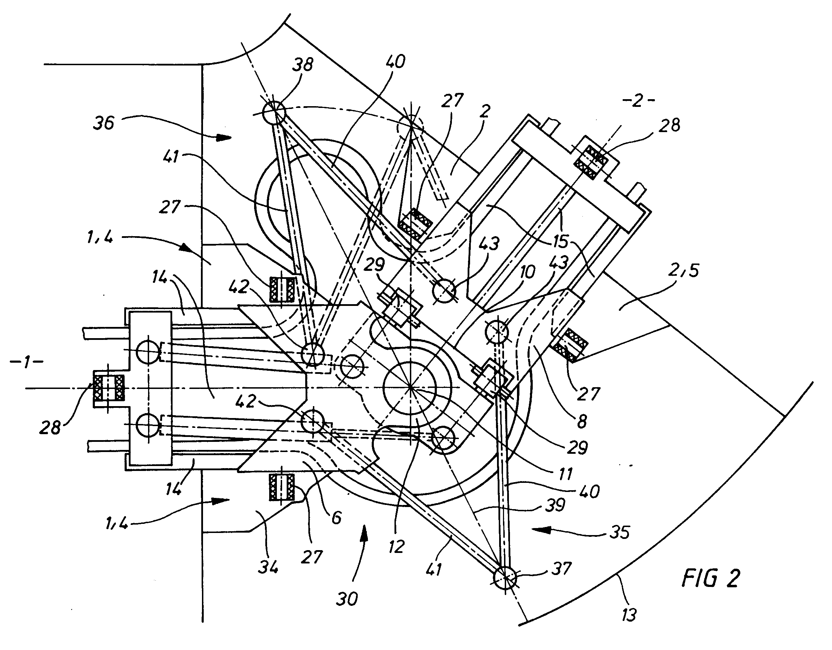

Das Drehgelenk bildet mit seinen vorderen Schwingblöcken 27 einen Hebelarm zu der Nickachse 10, wobei in der Nickachse 10 (vergleiche Figur 2) noch ein Paar in horizontaler Ebene liegender Schwingblöcke 29 angeordnet sind, welche Schwingblöcke (oder Molekulargelenke) die Nickachse selbst bilden und über die Längsachse des Rahmens 15 des Drehgelenkes 30 die Relativbewegung zwischen dem Vorderwagen und Hinterwagen 1,2 aufnehmen sollen.

Der Faltenbalg wird durch einen zeichnerisch nicht näher dargestellten Mittelrahmen im Bereich des Drehgelenkes 30 zentriert, wobei der Mittelrahmen in seiner Ebene senkrecht zur Längsachse durch Vorder- und Hinterwagen angeordnet ist.

Der vordere Rahmen des Drehgelenkes 30 wird durch die vorher erwähnte Platte 6 gebildet, während der hintere Rahmen des Drehgelenkes 30 durch die Platte 8 gebildet wird.

An jeder Seite des Drehgelenkes 30 ist jeweils ein Hebelpaar 35,36 angeordnet, wobei die Hebelpaare 35,36 im wesentlichen in horizontaler Ebene liegen. Jedes Hebelpaar 35,36 besteht aus jeweils einem Gelenkhebel 40,41, wobei die Gelenkhebel mit jeweils einem Fußpunkt 42 an dem vorderen Rahmen des Drehgelenkes 30 (Platte 6) ansetzen und mit ihrem hinteren Fußpunkt 43 an dem hinteren Rahmen des Drehgelenkes 30 (Platte 8).

Die Gelenkhebel sind bei ausgerichtetem Fahrzeug (der Vorderwagen fluchtet mit dem Hinterwagen) genau symmetrisch einander gegenüberliegend angeordnet. Die Gelenkhebel 40,41 sind hierbei durch äußere Drehlager 37,38 miteinander verbunden. Die beiden Drehlager 37,38 sind durch eine Linie 39 miteinander verbindbar, welche Linie genau durch die Knickachse 11 führt. Damit ist sichergestellt, daß sich die äußeren Drehlager 37,38 stets im Bereich der Winkelhalbierenden des Knickwinkels zwischen dem Vorder- und dem Hinterwgen 1,2 bewegen.

Die Verbindung des Mittelrahmens des Faltenbalges 3 mit den Drehlagern 37,38 kann auf unterschiedliche Weise gelöst werden.

In einer ersten Ausführungsform ist vorgesehen, daß der Mittelrahmen ein unteres, etwa parallel zur Bodenfläche sich erstreckendes Rohr aufweist, welches in einer entsprechenden Profilführung quer zur Längsachse des Fahrzeuges parallel zur Linie 39 verschiebbar geführt ist.

In einer zweiten Ausführungsform ist vorgesehen, daß die Verbindung zwischen den beiden Drehlagern 37,38 über eine nicht näher dargestellte drehscheibenartige Platte erfolgt, die unterhalb der Abdeckplatte 13 angeordnet ist. Diese Platte ist dann verschiebbar in Richtung der Linie 39 auf dem Drehgelenk 30 geführt und bildet somit die bodenseitige Abdichtung des Faltenbalges 3.

| ZEICHNUNGS-LEGENDE | | | |
|---|---|---|---|
| 1 | Vorderwagen | 27 | Schwingblock (vordere) |
| 2 | Hinterwagen | 28 | Schwingblock (hintere) |
| 3 | Faltenbalg | 29 | Schwingblock |
| 4 | Rahmen | 30 | Drehgelenk |
| 5 | Rahmen | | |
| 6 | Platte (obere) | 34 | Befestigungsplatte |
| 7 | Platte | 35 | Hebelpaar |
| 8 | Platte | 36 | Hebelpaar |
| 9 | Platte | 37 | Drehlager |
| 10 | Nickachse | 38 | Drehlager |
| 11 | Knickachse | 39 | Linie |
| 12 | Drehkranz | 40 | Gelenkhebel |
| 13 | Abdeckplatte | 41 | Gelenkhebel |
| 14 | Rahmen (Drehgelenk 30) | 42 | Fußpunkt |
| 15 | Rahmen (Drehgelenk 30) | 43 | Fußpunkt |

## Patentansprüche

1. Faltenbalgverbindung zwischen einem Vorder- (1) und einem Hinterwagen (2) eines Niederflur-Drehgelenk-Omnibuses, der zwischen einem hinteren Drehgelenkrahmen (4) des Vorderwagens und einem vorderen Drehgelenkrahmen (5) des Hinterwagens ein Drehgelenk (30) aufweist,
wobei die Faltenbalgverbindung zwei jeweils auf einer Fahrzeugseite angeordnete, einander bezüglich der Knickachse (11) des Drehgelenkes bei ausgerichtetem Fahrzeug symmetrisch gegenüberliegende, im wesentlichen in horizontaler Ebene liegende Hebelpaare (35, 36) umfaßt,
wobei die zwei Hebel (40, 41) eines Hebelpaares durch ein als Kugelkopf oder als Scharnier mit vertikaler Achse ausgebildetes, seitlich außen liegendes Drehlager (37, 38) endseitig miteinander verbunden sind, und mit ihrem von dem außen liegenden Drehlager gegenüberliegenden Ende jeweils einen Fußpunkt (42, 43) des Hebelpaares bilden,
wobei der eine Fußpunkt (42) jedes Hebelpaares mit dem Drehgelenkrahmen des Vorderwagens und der andere Fußpunkt (43) mit dem Drehlenkrahmen des Hinterwagens gelenkig verbunden ist, und
wobei die außen liegenden Drehlager der beiden Hebelpaare auf einer Linie (39) liegen, welche die Knickachse schneidet und die winkelhalbierende des Knickwinkels zwischen dem Vorder- und dem Hinterwagen bildet, **dadurch gekennzeichnet**, daß der Faltenbalg (3) einen Mittelrahmen aufweist, der in einer senkrechten, die Winkelhalbierende des Knickwinkels enthaltende Ebene liegt,
daß der Mittelrahmen ein etwa parallel zur Bodenfläche unter dem Boden des Drehgelenkes (30) oder direkt in horizontaler Richtung auf der Ebene der außen liegenden Drehlagern (37, 38) sich erstreckendes Rohr aufweist, das gelenkig mit den zwei außen liegenden Drehlagern verbunden ist und bezüglich der Knickachse (11) parallel zur Winkelhalbierenden des Knickwinkels verschiebbar geführt ist, wodurch der Mittelrahmen und somit der Faltenbalg (3) bei Kurvenfahrt bezüglich der Knickachse entlang der Winkelhalbierenden des Knickwinkels zum Kurveninneren hin verschoben wird.

2. Faltenbalgverbindung zwischen einem Vorder- (1) und einem Hinterwagen (2) eines Niederflur-Drehgelenk-Omnibuses, der zwischen einem hinteren Drehgelenkrahmen (4) des Vorderwagens und einem vorderen Drehgelenkrahmen (5) des Hinterwagens ein Drehgelenk (30) aufweist,
wobei die Faltenbalgverbindung zwei jeweils auf einer Fahrzeugseite angeordnete, einander bezüglich der Knickachse (11) des Drehgelenkes bei ausgerichtetem Fahrzeug symmetrisch gegenüberliegende, im wesentlichen in horizontaler Ebene liegende Hebelpaare (35,, 36) umfaßt,
wobei die zwei Hebel (40, 41) eines Hebelpaares durch ein als Kugelkopf oder als Scharnier mit vertikaler Achse ausgebildetes, seitlich außen liegendes Drehlager (37, 38) endseitig miteinander verbunden sind, und mit ihrem von dem außen liegenden Drehlager gegenüberliegenden Ende jeweils einen Fußpunkt (42, 43) des Hebelpaares bilden,
wobei der eine Fußpunkt (42) jedes Hebelpaares mit dem Drehgelenkrahmen des Vorderwagens und der andere Fußpunkt (43) mit dem Drehlenkrahmen des Hinterwagens gelenkig verbunden ist, und
wobei die außen liegenden Drehlager der beiden Hebelpaare auf einer Linie (39) liegen, welche die Knickachse schneidet und die Winkelhalbierende des Knickwinkels zwischen dem Vorder- und dem Hinterwagen bildet, **dadurch gekennzeichnet,** daß die Verbindung des Faltenbalgs (3) mit den beiden Drehlagern (37, 38) über eine, die beiden Drehlager verbindende, gelenkig an den Drehlagern angreifende Platte erfolgt, welche die bodenseitige Abdichtung des Faltenbalges (3) bildet, und die parallel und unterhalb einer oberhalb des Drehgelenkes (30) angebrachten Abdeckplatte (13) verschiebar angeordnet auf dem Drehgelenk (30) geführt ist, wodurch der Faltenbalg (3) bei Kurvenfahrt bezüglich der Knickachse entlang der Winkelhalbierenden des Knickwinkels zum Kurveninneren hin verschoben wird.

3. Faltenbalg-Verschiebeeinrichtung nach Anspruch 1 oder 2, **dadurch gekennzeichnet**, daß mindestens die Fußpunkte (43) der Gelenkhebel (40), die hinter der Achse einer zwischen Vorder- (1) und Hinterwagen (2) angebrachten Vorrichtung, die die Knickbewegung zwischen Vorder- (1) und Hinterwagen (2) ermöglicht, auf den Rahmen (8) des Hinterwagens (2) ansetzen, als Kugelköpfe ausgebildet sind.

4. Faltenbalg-Verschiebeeinrichtung nach Anspruch 1 und 2, **dadurch gekennzeichnet**, daß die außenliegenden Drehlager (37,38) der Hebelparre (35,36) als Kugelköpfe oder als Scharnier mit vertikaler Achse ausgebildet sind.

## Claims

1. Bellows connection between a front carriage (1) and a rear carriage (2) of a dropped-chassis swivel-joint bus which comprises a swivel joint (30) between a rear swivel joint frame (4) of the front carriage and a front swivel joint frame (5) of the rear carriage, wherein the bellows connection includes two pairs of levers (35, 36) which are each arranged on one side of the vehicle and symmetrically opposite each other in relation to the bending axis (11) of the swivel joint when the vehicle is aligned and which lie essentially in a horizontal plane, wherein the two levers (40, 41) of a pair of levers are connected to each other on the terminal side by a pivot bearing (37, 38) constructed as a ball head or as a hinge with vertical axis and lying laterally on the outside, and with their end opposite the outside pivot bearing form in each case a base (42, 43) of the pair of levers, wherein one base (42) of each pair of levers is pivotably connected to the swivel joint frame of the front carriage and the other base (43) to the swivel joint frame of the rear carriage, and wherein the outside pivot bearings of the two pairs of levers lie in a line (39) which intersects with the bending axis and forms the bisecting line of the bending angle between the front and rear carriages, characterised in that the concertina (3) comprises a centre frame which lies in a vertical plane containing the bisecting line of the bending angle, in that the centre frame comprises a pipe which extends more or less parallel to the bottom surface under the bottom of the swivel joint (30) or directly in a horizontal direction on the plane of the outside pivot bearings (37, 38) and which is pivotably connected to the two outside pivot bearings and slidably guided in relation to the bending axis (11) parallel to the bisecting line of the bending angle, as a result of which the centre frame and hence the bellows (3) when cornering is displaced in relation to the bending axis along the bisecting line of the bending angle towards the inside of the corner.

2. Bellows connection between a front carriage (1) and a rear carriage (2) of a dropped-chassis swivel-joint bus which comprises a swivel joint (30) between a rear swivel joint frame (4) of the front carriage and a front swivel joint frame (5) of the rear carriage, wherein the bellows connection includes two pairs of levers (35, 36) which are each arranged on one side of the vehicle and symmetrically opposite each other in relation to the bending axis (11) of the swivel joint when the vehicle is aligned and which lie essentially in a horizontal plane, wherein the two levers (40, 41) of a pair of levers are connected to each other on the terminal side by a pivot bearing (37, 38) constructed as a ball head or as a hinge with vertical axis and lying laterally on the outside, and with their end opposite the outside pivot bearing form in each case a base (42, 43) of the pair of levers, wherein one base (42) of each pair of levers is pivotably connected to the swivel joint frame of the front carriage and the other base (43) to the swivel joint frame of the rear carriage, and wherein the outside pivot bearings of the two pairs of levers lie in a line (39) which intersects with the bending axis and forms the bisecting line of the bending angle between the front and rear carriages, characterised in that connection of the bellows (3) to the two pivot bearings (37, 38) takes place via a plate which connects the two pivot bearings and pivotably engages the pivot bearings and which forms the bottom seal of the bellows (3) and which, arranged slidably parallel and below a cover plate (13) mounted above the swivel joint (30), is guided on the swivel joint (30), as a result of which the bellows (3) when cornering is displaced in relation to the bending axis along the bisecting line of the bending angle towards the inside of the corner.

3. Bellows displacement device according to claim 1 or 2, characterised in that at least the bases (43) of the pivot levers (40) which are applied to the frame (8) of the rear carriage (2) behind the axis of a device which is mounted between front (1) and rear (2) carriages and which allows the bending movement between front (1) and rear (2) carriages, are designed as ball heads.

4. Bellows displacement device according to claims 1 and 2, characterised in that the outside pivot bearings (37, 38) of the pairs of levers (35, 36) are designed as ball heads or as a hinge with vertical axis.

## Revendications

1. Liaison à soufflet entre une voiture avant (1) et une voiture arrière (2) d'un omnibus surbaissé à articulation tournante qui comporte, entre un châssis d'articulation tournante arrière (4) de la voiture avant et un châssis d'articulation tournante avant (5) de la voiture arrière, une articulation tournante (30),
étant précisé que la liaison à soufflet comprend deux paires de leviers (35, 36) disposées chacune sur un côté du véhicule, se faisant face symétriquement par rapport à l'axe d'inflexion (11) de l'articulation tournante lorsque le véhicule est aligné, et situées sensiblement dans un plan horizontal,
que les deux leviers (40, 41) d'une paire sont reliés entre eux, côté extrémité, par un palier de pivotement (37, 38) conçu comme une tête sphérique ou comme une charnière à axe vertical et situé à l'extérieur, latéralement, et forment chacun, avec leur extrémité opposée au palier de pivotement situé à l'extérieur, un point de base (42, 43) de la paire de leviers,
qu'un point de base (42) de chaque paire de levier est relié de façon articulée au châssis d'articulation tournante de la voiture avant tandis que l'autre point de base (43) est relié de façon articulée au châssis d'articulation tournante de la voiture arrière,
et que les paliers de pivotement, situés à l'extérieur, des deux paires de leviers, sont situés sur une ligne (39) qui coupe l'axe d'inflexion et définit la bissectrice de l'angle d'inflexion entre la voiture avant et la voiture arrière,
caractérisée en ce que le soufflet (3) comporte un châssis central qui est situé dans un plan perpendiculaire contenant la bissectrice de l'angle d'inflexion,
et en ce que le châssis central comporte un tube qui s'étend sensiblement parallèlement à la surface du plancher, sous le plancher de l'articulation tournante (30) ou directement dans le sens horizontal sur la plan des paliers de pivotement (37, 38) situés à l'extérieur, qui est relié de façon articulée aux deux paliers de pivotement situés à l'extérieur, et qui est guidé de façon mobile par rapport à l'axe d'inflexion (11), parallèlement à la bissectrice de l'angle d'inflexion, moyennant quoi, dans une courbe, le châssis central et, de ce fait, le soufflet (3) sont déplacés par rapport à l'axe d'inflexion, le long de la bissectrice de l'angle d'inflexion, en direction de l'intérieur de la courbe.

2. Liaison à soufflet entre une voiture avant (1) et une voiture arrière (2) d'un omnibus surbaissé à articulation tournante qui comporte, entre un châssis d'articulation tournante arrière (4) de la voiture avant et un châssis d'articulation tournante avant (5) de la voiture arrière, une articulation tournante (30),
étant précisé que la liaison à soufflet comprend deux paires de leviers (35, 36) disposées chacune sur un côté du véhicule, se faisant face symétriquement par rapport à l'axe d'inflexion (11) de l'articulation tournante lorsque le véhicule est aligné, et situées sensiblement dans un plan horizontal,
que les deux leviers (40, 41) d'une paire sont reliés entre eux, côté extrémité, par un palier de pivotement (37, 38) conçu comme une tête sphérique ou comme une charnière à axe vertical et situé à l'extérieur, latéralement, et forment chacun, avec leur extrémité opposée au palier de pivotement situé à l'extérieur, un point de base (42, 43) de la paire de leviers,
qu'un point de base (42) de chaque paire de levier est relié de façon articulée au châssis d'articulation tournante de la voiture avant tandis que l'autre point de base (43) est relié de façon articulée au châssis d'articulation tournante de la voiture arrière,
et que les paliers de pivotement, situés à l'extérieur, des deux paires de leviers, sont situés sur une ligne (39) qui coupe l'axe d'inflexion et définit la bissectrice de l'angle d'inflexion entre la voiture avant et la voiture arrière,
caractérisée en ce que la liaison entre le soufflet (3) et les deux paliers de pivotement (37, 38) se fait par l'intermédiaire d'une plaque reliant les deux paliers de pivotement et en prise de façon articulée au niveau desdits paliers de pivotement, qui réalise l'étanchéité du soufflet (3) côté plancher, et qui est guidée sur l'articulation tournante (30) pour pouvoir être déplacée parallèlement au-dessous d'une plaque de recouvrement (13) montée au-dessus de l'articulation tournante (30), moyennant quoi, dans une courbe, le soufflet (3) est déplacé par rapport à l'axe d'inflexion, le long de la bissectrice de l'angle d'inflexion, en direction de l'intérieur de la courbe.

3. Dispositif de déplacement de soufflet selon la revendication 1 ou 2, caractérisé en ce qu'au moins les points de base (43) des leviers articulés (40) qui sont appliqués sur le châssis (8) de la voiture arrière (2) derrière l'axe d'un dispositif monté entre la voiture avant (1) et la voiture arrière (2) et permettant le mouvement d'inflexion entre celles-ci, sont conçus comme des têtes sphériques.

4. Dispositif de déplacement de soufflet selon les revendications 1 et 2, caractérisé en ce que les paliers de pivotement (37, 38), situés à l'extérieur, des paires de leviers (35, 36) sont conçus comme des têtes sphériques ou comme des charnières à axe vertical.
